# EUROPEAN PATENT APPLICATION

(11) **EP 4 518 345 A1**
(43) Date of publication of application: **05.03.2025**
(21) Application number: 23814949.6
(22) Date of filing: 16.05.2023
(51) Int. Cl.: H04Q 11/00

(54) **SERVICE DATA PROCESSING METHOD AND DEVICE**

(30) Priority: 30.05.2022 CN 202210598317
(71) Applicant: Huawei Technologies Co., Ltd., Shenzhen, Guangdong 518129 (CN)
(72) Inventor: ZHENG, Shuqian, Shenzhen, Guangdong 518129 (CN); LIU, Xiang, Shenzhen, Guangdong 518129 (CN); SU, Wei, Shenzhen, Guangdong 518129 (CN)
(74) Representative: Gill Jennings & Every LLP
(86) International application number: PCT/CN2023/094476
(87) International publication number: WO 2023/231764

(57) **Abstract**

Embodiments of this application provide a service data processing method. The method includes: receiving service data, performing encapsulation, rate matching, and timeslot multiplexing on the service data by code block to obtain an intermediate frame, mapping the intermediate frame to an OTN frame, and sending the OTN frame. A size of the code block is a plurality of bytes, and the code block includes information indicating a code block type. If the code block is an overhead code block or a rate adaptation code block, the code block further includes information indicating a timeslot multiplexing layer at which the code block is located. In all processing procedures of the service data, the service data is processed at a uniform code block processing granularity, and this reduces complexity of the service data processing.

## Description

This application claims priority to Chinese Patent Application No. 202210598317.4, filed with the China National Intellectual Property Administration on May 30, 2022 and entitled "SERVICE DATA PROCESSING METHOD AND APPARATUS", which is incorporated herein by reference in its entirety.

### TECHNICAL FIELD

This application relates to the optical communication field, and more specifically, to a service data processing method and an apparatus.

### BACKGROUND

A virtual container (virtual container, VC) introduced by a synchronous digital hierarchy (synchronous digital hierarchy, SDH) technology is used to carry a plurality of types of low-rate service data (for example, 2 megabits per second (megabits per second, Mbps) to hundreds of Mbps). An optical transport network (optical transport network, OTN) includes optical carrier containers with a plurality of rates for carrying a plurality of types of high-rate service data. For example, an optical data unit 0 (optical data unit 0, ODUO) frame is a carrier container with a lowest rate in a current OTN technology, and the rate of the optical data unit 0 frame is approximately 1.25 gigabits per second (gigabits per second, Gbps), and is used to carry 1 Gbps Ethernet service data (for example, Ethernet service data).

With gradual withdrawal of the SDH technology from the market and development of the OTN technology, application scopes of the OTN technology are expanded from a backbone network to a metropolitan area network, and even to an access network. Increasing requirements for carrying low-rate services are imposed on the OTN technology. Currently, a method for carrying a low-rate service in the OTN is as follows: After low-rate service data is mapped and multiplexed into a high-rate signal, the signal is carried by an existing optical carrier container in the OTN. However, in the method for carrying the service data, timeslot multiplexing processing is complex in a service data processing process.

### SUMMARY

Embodiments of this application provide a service data processing method. Service data is processed at a uniform code block processing granularity, and this reduces complexity of service data processing.

According to a first aspect, the service data processing method is provided. The method may be performed by a transmitting end device, or may be performed by a component (for example, a chip or a circuit) of the transmitting end device. This is not limited herein. In this embodiment of this application, the transmitting end device is a device that sends an OTN frame, and may be a source end processing device, or may be an intermediate device.

The service data processing method includes: receiving service data, performing encapsulation, rate matching, and timeslot multiplexing on the service data by code block to obtain an intermediate frame, mapping the intermediate frame that carries the service data to an OTN frame, and sending the OTN frame, where a size of the code block is a plurality of bytes, the code block includes first information, the first information indicates a code block type of the code block, when the code block type of the code block is an overhead code block or a rate adaptation code block, the code block further includes second information, and the second information indicates a timeslot multiplexing layer at which the code block is located.

Based on the foregoing service data processing method, in a process of processing the received service data, the transmitting end device ensures that the code block is used as a granularity in different processing procedures (for example, encapsulation, rate matching, and timeslot multiplexing) of the service data. This reduces complexity of service data processing.

In addition, based on the foregoing service data processing method, although the size of the code block is uniformly defined, to distinguish between code blocks of different types and to distinguish whether a specific code block needs to be processed, the code block carries information indicating the code block type, or may further carry information indicating the timeslot multiplexing layer at which the code block is located. This facilitates a device identifying the code blocks of different code block types, and determining whether the code block needs to be processed (for example, deleting the code block or subtracting 1 from a value of second information of the code block).

With reference to the first aspect, in some implementations of the first aspect, the first information includes first indication information and second indication information, the first indication information indicates that the code block is a data code block or a non-data code block, and the second indication information indicates that the non-data code block is an overhead code block or a rate adaptation code block; or the first information may be a field, in other words, a function of the first information may be implemented in different manners, and this improves flexibility of the solution.

With reference to the first aspect, in some implementations of the first aspect, the second information occupies n bits, and a value of n is any positive integer from 1 to 8. There may be a plurality of values of the second information, and nested timeslot multiplexing of different layers is supported.

With reference to the first aspect, in some implementations of the first aspect, the performing encapsulation, rate matching, and timeslot multiplexing on the service data by code block to obtain an intermediate frame includes: dividing the service data into one or more data code blocks based on the size of the code block; encapsulating the one or more data code blocks into a data frame, where the 1^{st} column of the data frame is a first overhead code block, and the first overhead code block is used to manage the one or more data code blocks; inserting a rate adaptation code block into the data frame for rate matching, to obtain a first code stream; and performing timeslot multiplexing based on the first code stream and at least one second code stream to obtain the intermediate frame, where the 1^{st} column of the intermediate frame is a second overhead code block, the second overhead code block is used to manage the first code stream and the at least one second code stream, and sizes of the data code block, the rate adaptation code block, the first overhead code block, and the second overhead code block are equal to the size of the code block. The sizes of the code blocks (for example, the data code block, the rate adaptation code block, and the overhead code block) involved in each service data processing procedure are equal to the defined size of the code block, so that the service data is processed at a uniform code block processing granularity, and the complexity of service data processing is reduced.

With reference to the first aspect, in some implementations of the first aspect, the inserting a rate adaptation code block into the data frame for rate matching includes: determining a status of a cache allocated to the service data; when the status of the cache is empty, inserting the rate adaptation code, setting a value of second information of the inserted rate adaptation code to 0, and outputting the rate adaptation code; when a first code block is cached in the cache, determining whether the first code block is the rate adaptation code; when the first code block is the rate adaptation code, outputting the first code block after adding 1 to a value of second information of the first code block; and when the first code block is not the rate adaptation code, outputting the first code block. In a rate adaptation procedure, the value of the second information of the rate adaptation code block is set, indicating a device that receives the rate adaptation code block to determine whether the rate adaptation code block needs to be processed.

With reference to the first aspect, in some implementations of the first aspect, the performing timeslot multiplexing based on the first code stream and at least one second code stream to obtain the intermediate frame includes: inserting the second overhead code block at an overhead location of the intermediate frame; or determining an identifier of a timeslot corresponding to a payload location of the intermediate frame, and obtaining, based on a timeslot configuration table and the identifier of the timeslot, a second code block from a cache allocated to first service data; when the second code block is an overhead code block, outputting the second code block after adding 1 to a value of second information in the second code block; and when the second code block is not the overhead code block, outputting the second code block, where the timeslot configuration table includes a correspondence between an identifier of a timeslot and an identifier of the cache allocated to the first service data, and the first service data includes the service data and service data corresponding to the at least one second code stream. In a timeslot multiplexing processing procedure, the value of the second information in the overhead code block is set, indicating a device that receives the overhead code block to determine whether the overhead code block needs to be processed.

With reference to the first aspect, in some implementations of the first aspect, that a size of the code block is a plurality of bytes includes any one of the following: the size of the code block is 64, 128, 192, 240, or 256 bytes. The code block that is defined in the uniform size may have a plurality of possible values, to support service data transmission at different rates.

According to a second aspect, a service data processing method is provided. The method may be performed by a receiving end device, or may be performed by a component (for example, a chip or a circuit) of the receiving end device. This is not limited herein. In this embodiment of this application, the receiving end device is a device that receives an OTN frame, and may be a sink end processing device, or may be an intermediate device.

The service data processing method includes: receiving an optical transport network OTN frame, where the OTN frame is used to carry an intermediate frame that carries service data, and the intermediate frame is obtained by performing encapsulation, rate matching, and timeslot multiplexing on the service data by code block; and performing timeslot demultiplexing, rate adaptation code block deletion, and decapsulation by code block to obtain the service data from the OTN frame, where a size of the code block is a plurality of bytes, the code block includes first information, the first information indicates a code block type of the code block, when the code block type of the code block is an overhead code block or a rate adaptation code block, the code block further includes second information, and the second information indicates a timeslot multiplexing layer at which the code block is located.

Based on the foregoing service data processing method, after receiving the OTN frame, in a process of obtaining the service data from the OTN frame, the receiving end device ensures that the code block is used as a granularity in different processing procedures (for example, encapsulation, rate matching, and timeslot multiplexing) for obtaining the service data. This reduces complexity of obtaining the service data.

With reference to the second aspect, in some implementations of the second aspect, the first information includes first indication information and second indication information, the first indication information indicates that the code block is a data code block or a non-data code block, and the second indication information indicates that the non-data code block is an overhead code block or a rate adaptation code block; or the first information may be a field, in other words, a function of the first information may be implemented in different manners, and this improves flexibility of the solution.

With reference to the second aspect, in some implementations of the second aspect, the second information occupies n bits, and a value of n is any positive integer from 1 to 8. There may be a plurality of values of the second information, and nested timeslot multiplexing of different layers is supported.

With reference to the second aspect, in some implementations of the second aspect, the performing timeslot demultiplexing, rate adaptation code block deletion, and decapsulation by code block to obtain the service data from the OTN frame includes: obtaining, based on first frame header location indication information OPTR of the intermediate frame included in a payload overhead area of the OTN frame, a location of a second overhead code block included in the intermediate frame; obtaining mapping relationships between code blocks and services in different code streams based on a multiplexing identifier MSI in the second overhead code block, and performing timeslot demultiplexing on a plurality of code streams to obtain a first code stream and at least one second code stream; and deleting the rate adaptation code block from the first code stream, and obtaining a data frame corresponding to the service data, where the data frame includes one or more data code blocks corresponding to the service data, the 1^{st} column of the data frame is a first overhead code block, and the first overhead code block is used to manage the one or more data code blocks.

With reference to the second aspect, in some implementations of the second aspect, the deleting the rate adaptation code block from the first code stream includes: determining whether a third code block in the first code stream is the rate adaptation code block; when the third code block is not a rate adaptation code, outputting the third code block; when the third code block is the rate adaptation code, determining whether a value of second information of the third code block is 0; when the value of the second information of the third code block is 0, deleting the third code block; and when the value of the second information of the third code block is not 0, outputting the third code block after subtracting 1 from the value of the second information of the third code block. In a rate adaptation code block deletion procedure, the receiving end device may determine, based on the value of the second information in the rate adaptation code block, whether to delete the rate adaptation code block, or determine whether to transmit the rate adaptation code block to a next-hop node for processing.

With reference to the second aspect, in some implementations of the second aspect, the performing timeslot demultiplexing on a plurality of code streams includes: determining whether a fourth code block in the code stream is the overhead code block; when the fourth code block is not the overhead code block, determining an identifier of a timeslot corresponding to the fourth code block, determining, based on a timeslot configuration table and the identifier of the timeslot, a cache allocated to first service data, and outputting the fourth code block to the cache; when the fourth code block is the overhead code block, determining whether a value of second information of the fourth code block is 0; when the value of the second information of the fourth code block is 0, deleting the fourth code block; and when the value of the second information of the fourth code block is not 0, outputting the fourth code block to the cache after subtracting 1 from the value of the second information of the fourth code block, where the timeslot configuration table includes a correspondence between an identifier of a timeslot and an identifier of the cache allocated to the first service data, and the first service data includes the service data and service data corresponding to the at least one second code stream. In a timeslot demultiplexing procedure, the receiving end device may determine, based on the value of the second information of the overhead code block, whether to delete the overhead code block, or determine whether to transmit the overhead code block to a next-hop node for processing.

With reference to the second aspect, in some implementations of the second aspect, that a size of the code block is a plurality of bytes includes any one of the following: the size of the code block is 64, 128, 192, 240, or 256 bytes. The size of the code block that is uniformly defined may have a plurality of possible values, to support service data transmission at different rates.

According to a third aspect, a service data processing apparatus is provided, and the apparatus is configured to perform the method provided in the first aspect. Specifically, the service data processing apparatus may include units and/or modules configured to perform the method provided in any one of the first aspect or the foregoing implementations of the first aspect, for example, a processing unit and an obtaining unit.

In an implementation, the service data processing apparatus is a transmitting end device. The obtaining unit may be a transceiver or an input/output interface, and the processing unit may be at least one processor. Optionally, the transceiver may be a transceiver circuit. Optionally, the input/output interface may be an input/output circuit.

In another implementation, the service data processing apparatus is a chip, a chip system, or a circuit in the transmitting end device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

For beneficial effects of the method shown in the third aspect and the possible designs of the third aspect, refer to beneficial effects in the first aspect and the possible designs of the first aspect.

According to a fourth aspect, a service data processing apparatus is provided. The apparatus is configured to perform the method provided in the second aspect. Specifically, the service data processing apparatus may include units and/or modules configured to perform the method provided in the second aspect, for example, a processing unit and an obtaining unit.

In an implementation, the service data processing apparatus is a receiving end device. The obtaining unit may be a transceiver or an input/output interface, and the processing unit may be at least one processor. Optionally, the transceiver may be a transceiver circuit. Optionally, the input/output interface may be an input/output circuit.

In another implementation, the service data processing apparatus is a chip, a chip system, or a circuit in the receiving end device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a fifth aspect, this application provides a processor, configured to perform the method according to each of the foregoing aspects.

Operations like sending and obtaining/receiving related to the processor may be understood as operations like outputting and receiving or inputting of the processor, or operations like transmitting and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code executed by a device, and the program code includes the method provided in any one of the implementations of the first aspect or the second aspect.

According to a seventh aspect, a computer program product including instructions is provided. When the computer program product is run on a computer, the computer is enabled to perform the method provided in any one of the implementations of the first aspect or the second aspect.

According to an eighth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes the memory, the memory stores a computer program or instructions, the processor is configured to execute the computer program or the instructions stored in the memory, and when the computer program or the instructions is or are executed, the processor is configured to perform the method provided in any one of the implementations of the first aspect or the second aspect.

According to a ninth aspect, a communication system is provided, including a service data processing apparatus according to the third aspect and a service data processing apparatus according to the fourth aspect.

### BRIEF DESCRIPTION OF DRAWINGS

FIG. 1 is a diagram of an application scenario to which this application is applicable;
FIG. 2 is a diagram of a structure of an optical transport device;
FIG. 3 is a diagram of multiplexing a low-rate service into a high-rate signal;
FIG. 4 is a schematic flowchart of a service data processing method according to an embodiment of this application;
FIG. 5 is a diagram of an overall service data processing procedure according to an embodiment of this application;
FIG. 6 is a diagram of a frame structure of a data frame according to an embodiment of this application;
(a) to (c) in FIG. 7 is a diagram of different types of code blocks according to an embodiment of this application;
FIG. 8 is a schematic flowchart of rate adaptation according to an embodiment of this application;
FIG. 9 is a schematic flowchart of timeslot multiplexing according to an embodiment of this application;
FIG. 10 is a schematic flowchart of timeslot demultiplexing according to an embodiment of this application;
FIG. 11 is a schematic flowchart of rate adaptation code block deletion according to an embodiment of this application; and
FIG. 12 is a diagram of a possible structure of a device.

### DESCRIPTION OF EMBODIMENTS

The following describes technical solutions of embodiments in this application with reference to accompanying drawings.

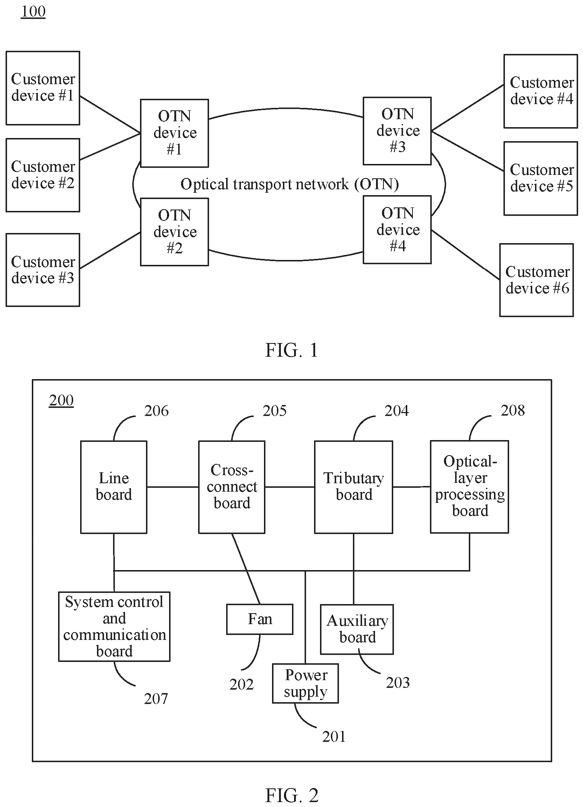

FIG. 1 is a diagram of an application scenario to which this application is applicable. The technical solutions in embodiments of this application may be applied to a communication system 100 including an OTN and a plurality of customer devices (for example, a customer device #1 to a customer device #6 shown in FIG. 1). The OTN includes a plurality of interconnected OTN devices (an OTN device #1 to an OTN device #4 shown in FIG. 1).

It should be noted that FIG. 1 shows only the OTN devices configured to connect to the customer devices. In an actual application, the OTN may further include more OTN devices, for example, another OTN device exists between the OTN devices (for example, an OTN device connected to the OTN device #1 and the OTN device #3 shown in FIG. 1 exists between the OTN device #1 and the OTN device #3), which is not shown in FIG. 1.

In addition, FIG. 1 does not show a specific connection relationship between the OTN devices. Specifically, for a connection manner between the OTN devices, refer to descriptions in a current related technology. Details are not described in this application.

It should be understood that the OTN devices in an OTN network are connected through an optical fiber, and may form different topology types such as a linear topology, a ring topology, and a mesh topology according to a specific requirement. For example, the customer device may also be referred to as a customer premise equipment (customer premise equipment, CPE). A specific form of the customer device is not limited in this application, and the customer device includes but is not limited to a terminal communicating with an OTN device. The terminal may also be referred to as a subscriber unit, a subscriber station, a mobile station, a wireless communication device, a user agent, or a user apparatus. The customer device may be a device that needs to transmit service data.

One OTN device may have different functions. Generally, OTN devices are classified into an optical-layer device, an electrical-layer device, and an electro-optical hybrid device. The optical-layer device is a device that can process an optical-layer signal, like an optical amplifier (optical amplifier, OA) or an optical add-drop multiplexer (optical add-drop multiplexer, OADM). The OA is also called an optical line amplifier (optical line amplifier, OLA), and is mainly used to amplify an optical signal to support a longer transmission distance while ensuring specific performance of the optical signal. The OADM is configured to perform spatial conversion on an optical signal, so that the optical signal can be output from different output ports (sometimes also referred to as directions). Based on different capabilities, the OADMs may be classified into a fixed OADM (fixed OADM, FOADM) and a configurable OADM (reconfigurable OADM, ROADM). The electrical-layer device is a device that can process an electrical-layer signal, for example, a device that can process an OTN electrical signal. The electro-optical hybrid device is a device that has a capability of processing an optical-layer signal and an electrical-layer signal.

It should be noted that various functions may be integrated in one OTN device based on a specific integration requirement. The technical solutions provided in this application are applicable to OTN devices of different forms and integration degrees, and are particularly applicable to the OTN device configured to connect to the customer device.

FIG. 2 is a diagram of a structure of an optical transport device. For example, the optical transport device shown in FIG. 2 is one of the OTN device #1 to the OTN device #4 in FIG. 1. It can be learned from FIG. 2 that an OTN device 200 includes a power supply 201, a fan 202, and an auxiliary board 203, and may further include a tributary board 204, a line board 206, a cross-connect board 205, an optical-layer processing board 208, and a system control and communication board 207.

It should be noted that types and quantities of boards that are specifically included in each device may vary based on a specific requirement. For example, a network device serving as a core node may not have the tributary board 204; and for another example, a network device serving as an edge node may have a plurality of tributary boards 204. The power supply 201 is configured to supply power to the OTN device 200, and may include an active power supply and a standby power supply. The fan 202 is configured to dissipate heat for a device. The auxiliary board 203 is configured to provide an auxiliary function, for example, an external alarm or accessing an external clock. The tributary board 204, the cross-connect board 205, and the line board 206 are mainly configured to process an electrical-layer signal of an OTN.

The tributary board 204 is configured to implement receiving and sending of various customer services, for example, an SDH service, a packet service, an Ethernet service, and a forward service. Further, the tributary board 204 may be divided into a customer-side optical module and a signal processor. The customer-side optical module may be an optical transceiver, configured to receive and/or send service data. The signal processor is configured to map service data to a data frame and demap the service data from the data frame. The cross-connect board 205 is configured to implement switching of data frames, and complete switching of one or more types of data frames. The line board 206 mainly implements processing of a line-side data frame.

The line board 206 may be divided into a line-side optical module and a signal processor. The line-side optical module may be a line-side optical transceiver, configured to receive and/or send a data frame. The signal processor is configured to multiplex and demultiplex, or map and demap a line-side frame.

The system control and communication board 207 is configured to implement system control and communication. Specifically, the system control and communication board 207 may collect information from different boards by using a backplane, or send control instructions to a corresponding board.

It should be noted that unless otherwise specified, there may be one or more specific components (for example, a signal processor). This is not limited in this application. It should be further noted that FIG. 2 merely provides an example of a possible structure of the OTN device, and does not constitute any limitation on the protection scope of this application. The structure of the OTN device is not limited in this application, and the OTN device may be an existing OTN device or an OTN device in the future when the OTN is developed.

It should be understood that the method provided in embodiments of this application may be applied to an optical transport network, for example, a communication system shown in FIG. 1. However, a scenario to which the method can be applied is not limited in embodiments of this application. For example, the method is also applicable to another communication system including a device (for example, an OTN device or another communication device) that can implement a corresponding function.

For ease of understanding the technical solutions in embodiments of this application, some terms or concepts that may be used in embodiments of this application are first briefly described.
1. OTN frame: The OTN frame is a data frame structure used by an OTN device. The OTN frame may also be referred to as an OTN transmission frame. The OTN frame is used to carry various types of service data and provides various management and monitoring functions. The OTN frame may be a flexible optical service unit (flexible optical service unit, OSUflex) frame, and the OSUflex may also be referred to as an OSU frame for short. Alternatively, the OTN frame may be an optical data unit-k (optical data unit-k, ODUk) frame, an ODUCn frame, an ODUflex frame, an OTUk frame, an OTUCn frame, a flexible OTN (flexible OTN, FlexO) frame, or the like.

A difference between an ODU frame and an OTU frame lies in that the OTU frame includes the ODU frame and OTU overhead. k represents different rate levels. For example, k = 1 represents 2.5 Gbps, and k = 4 represents 100 Gbps. Cn represents a variable rate, which is specifically a rate that is a positive integer multiple of 100 Gbps. Unless otherwise specified, the ODU frame refers to any one of the ODUk, ODUCn, or ODUflex frame, and the OTU frame refers to any one of the OTUk, OTUCn, or FlexO frame.

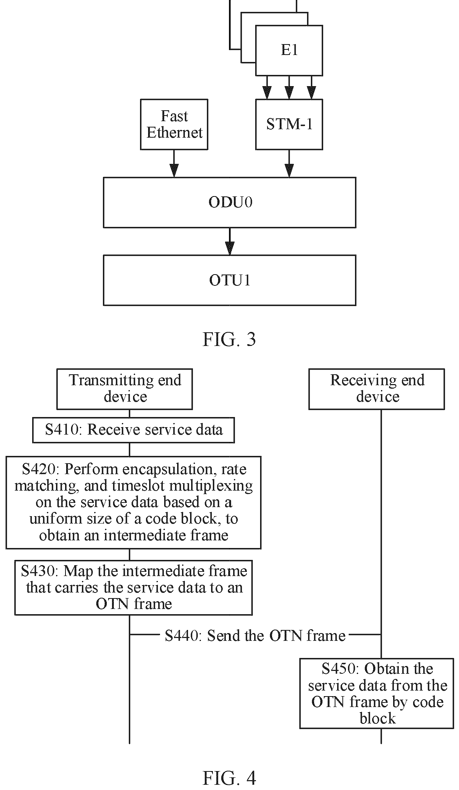

It should be further noted that with development of an OTN technology, a new type of OTN frame may be defined, and is applicable to this application.
2. OTN frame structure: The OTN frame structure includes four rows and a plurality of columns, and include an overhead area, a payload area, and a forward error correction (Forward Error Correction, FEC) area. Specifically, for specific descriptions of the OTN frame structure, refer to related descriptions in a current protocol. Details are not described in this application.
3. Multiplexing a low-rate service into a high-rate signal: The multiplexing a low-rate service into a high-rate signal refer to a case in which when a fast Ethernet (fast Ethernet, FE) needs to be transmitted through an OTN, the FE is first mapped into an ODUO frame of a rate of about 1.25 Gbps, and then transmitted in the OTN through an OTU1. In this way, transmission efficiency is low, and an occupied bandwidth of the ODUO is less than 10%. For ease of understanding, a transmission manner of a low-rate service is described with reference to FIG. 3.

FIG. 3 is a diagram of multiplexing a low-rate service into a high-rate signal. As shown in FIG. 3, a plurality of E1 signals are first mapped to a synchronous transport module-1 (synchronous transport module-1, STM-1) interface signal. The STM-1 is a type of SDH signal. The STM-1 interface signal is then mapped into an ODUO, and then transmission of the STM-1 interface signal is performed in the OTN through an OTU1.

In this application, multiplexing a low-rate service into a high-rate signal may also be referred to as signal "multiplexing", and may be understood as multiplexing a plurality of signals into an OTN signal based on a corresponding timeslot arrangement.

4. Error tolerance capability: The error tolerance capability is a capability of using a fault tolerance technology to enable a computer system to continue to run properly in the case of error occurrence. The error tolerance capability may also be referred to as an error correction capability.

Based on the foregoing descriptions, the following describes in detail the service data processing method provided in this application with reference to the accompanying drawings.

A specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be an OTN device, or a functional module that can invoke and execute a program in the OTN device, or may be another communication device.

For ease of understanding of embodiments of this application, the following descriptions are provided.

First, in this application, "indicate" may include directly indicating and indirectly indicating. When a piece of description information indicates A, the information may directly indicate A or indirectly indicate A, but it does not indicate that the information definitely carries A.

Second, "at least one" shown in this application means one or more, and "a plurality of" means two or more. "And/or" describes an association relationship between associated objects, and three relationships may exist. For example, A and/or B may represent the following three cases: Only A exists, both A and B exist, and only B exists. In addition, in descriptions of this application, terms such as "first", "second", and various numbers (for example, "#1" and "#2") are merely used for distinguishing and describing, for example, distinguishing between different OTN devices. However, the terms cannot be understood as an indication or implication of relative importance, or an indication or implication of a sequence. It should be understood that the objects described in such a way are interchangeable in a proper circumstance, so that a solution other than embodiments of this application can be described. In addition, in embodiments of this application, words such as "1201", "1202", and "1203" are merely identifiers for ease of description, and do not limit this application.

Third, in embodiments of this application, a word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

Fourth, a "protocol" in embodiments of this application may be a standard protocol in an OTN field, for example, a G.709 standard protocol including ITU-T and a related protocol applied to a future OTN system. This is not limited in this application.

Fifth, "store" in embodiments of this application may refer to storing in one or more memories. The one or more memories may be separately disposed, or may be integrated into an encoder, a decoder, a processor, or a communication apparatus. Alternatively, a part of the one or more memories may be separately disposed, and another part of the one or more memories are integrated into the decoder, the processor, or the communication apparatus. A type of the memory may be a storage medium in any form.

Sixth, in embodiments of this application, "of (of)", "relevant (relevant)", "corresponding (corresponding)", and "associate (associate)" may be interchangeably used sometimes. It should be noted that meanings needing to be expressed by them are consistent when their differences are not emphasized.

Seventh, unless otherwise specified, specific descriptions of some technical features in an embodiment may also be used to explain corresponding technical features mentioned in another embodiment. For example, a definition of a code block in an embodiment may be applied to another embodiment, and details may not be described again in the another embodiment.

FIG. 4 is a schematic flowchart of a service data processing method according to this application. As shown in FIG. 4, the service data processing method includes the following steps.

S410: A transmitting end device receives service data.

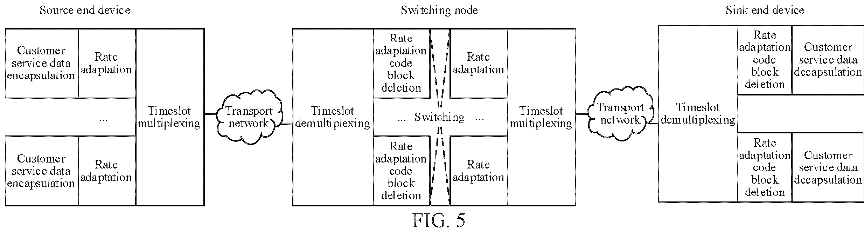

The transmitting end device may be different devices in a service data transmission procedure. For ease of understanding, a process of processing the service data is described with reference to FIG. 5. FIG. 5 is a diagram of an overall service data processing procedure according to an embodiment of this application.

It can be learned from FIG. 5 that devices in a service data transmission procedure include a source end processing device, a switching node (which may also be referred to as an intermediate device), and a sink end processing device. There may be a plurality of switching nodes, which are not shown in FIG. 5.

Specifically, the source end processing device may be understood as a device that receives service data from a customer device. For example, the source end processing device is the foregoing OTN device (for example, an OTN device #1 shown in FIG. 1), and receives the service data from the customer device (for example, a customer device #1 or a customer device #2 shown in FIG. 1). Alternatively, the source end processing device is another device that can implement a function of the OTN device. A specific form of the source end processing device is not limited in this embodiment of this application, provided that a corresponding service data processing function can be implemented.

The switching node may be understood as a device that receives a frame (or a data stream, a code stream, or the like) (for example, a result of timeslot multiplexing performed by a previous-hop node) from the previous-hop node (for example, the source end processing device).

The transmitting end device may be the source end processing device in FIG. 5 or the intermediate device (for example, the switching node shown in FIG. 5). In this embodiment, a role played by the transmitting end device in the overall service data processing procedure is not limited. A device that needs to perform rate matching and timeslot multiplexing in the overall service data processing procedure may be understood as the transmitting end device.

In a possible implementation, when the transmitting end device is the source end processing device, the service data received by the transmitting end device may be understood as the service data received by the transmitting end device from the customer device. In another possible implementation, when the transmitting end device is the intermediate device, the service data received by the transmitting end device may be understood as service data obtained by performing timeslot demultiplexing and rate adaptation code block deletion by the intermediate device on the data stream (for example, the result of timeslot multiplexing performed by the previous-hop node) received by the intermediate device from the previous-hop node.

For example, the service data in this embodiment of this application is a service that can be carried by an optical transport network. The service includes but is not limited to: an Ethernet service, a packet service, and a wireless backhaul service. It should be understood that a type of the service data is not limited in this embodiment of this application.

After the transmitting end device receives the service data, or when the transmitting end device receives the service data, the transmitting end device processes the service data by code block to obtain an intermediate frame.

S420: The transmitting end device processes the service data by code block to obtain the intermediate frame.

The transmitting end device performs encapsulation, rate matching, and timeslot multiplexing on the service data based on a uniform size of the code block to obtain the intermediate frame. In a process of processing the received service data, the transmitting end device ensures that the code block is used as a granularity in different processing procedures (for example, encapsulation, rate matching, and timeslot multiplexing) of the service data. This reduces complexity of service data processing.

For example, "by code block" in this embodiment may be understood as "using the code block as a processing granularity", or may be understood as "using the code block as a processing size", indicating that the service data processing procedure is performed based on the code block.

The intermediate frame carries the service data, so that transmission of the service data is performed in an OTN. In this embodiment, the intermediate frame may also be referred to as a transmission frame, and a name of a frame carrying the service data is not limited in this embodiment.

Specifically, the size of the code block in this embodiment is X bytes, and X is an integer greater than 1. For example, X may be a value like 64, 128, 192, 240, or 256. It may be understood that in this embodiment, the code block that is defined in the uniform size may have a plurality of possible values, to support service data transmission at different rates.

In addition, the size of the code block in this embodiment may be understood as a bit width of the code block. The bit width may be understood as a quantity of bits of the code block. In other words, the bit width of the code block may be understood as a length of bytes occupied by the code block. In this embodiment, the size of the code block and the bit width of the code block have a same meaning, and may be used interchangeably.

In this embodiment, control information (which may be referred to as an overhead (overhead, OH) code block, O code for short), the service data (which may be referred to as a data (data) code block, D code for short), and a rate adaptation code block (idle (idle) code block, I code for short) are all measured in code blocks.

For example, the service data is divided into one or more data code blocks (for example, a size of the data code block is X bytes) by code block. For another example, in a rate matching procedure, a size of an inserted rate adaptation code block is measured in code blocks (for example, the size of the rate adaptation code block is X bytes). For another example, in a timeslot multiplexing procedure, an inserted overhead code block is measured in code blocks (for example, a size of the overhead code block is X bytes).

Specifically, that the transmitting end device processes the service data by code block includes performing encapsulation, rate matching, and timeslot multiplexing on the service data. Encapsulation of the service data may be understood as dividing the service data into the one or more data code blocks by code block, and encapsulating the one or more data code blocks into a data frame. The data frame further includes a first overhead code block used to manage the data code block. For example, the 1^{st} column of the data frame is the first overhead code block, and the first overhead code block is used to manage the one or more data code blocks.

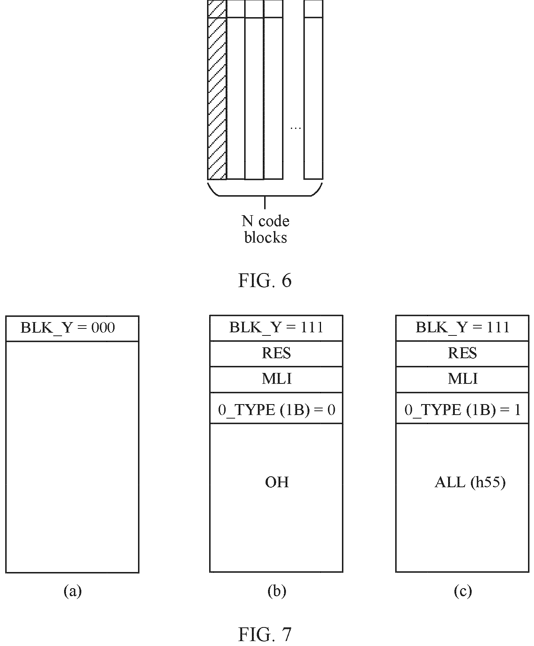

For ease of understanding, the data frame in this embodiment is described in detail with reference to FIG. 6. FIG. 6 is a diagram of a frame structure of a data frame according to an embodiment of this application.

It can be learned from FIG. 6 that the frame structure of the data frame is defined as: An N-column data structure is established based on an X-byte code block, where each column may be understood as a code block. The 1^{st} column is used as a first overhead code block column, the other columns are used as data code block columns, a data code block is used to carry service data, and a first overhead code block is used to manage the data code block.

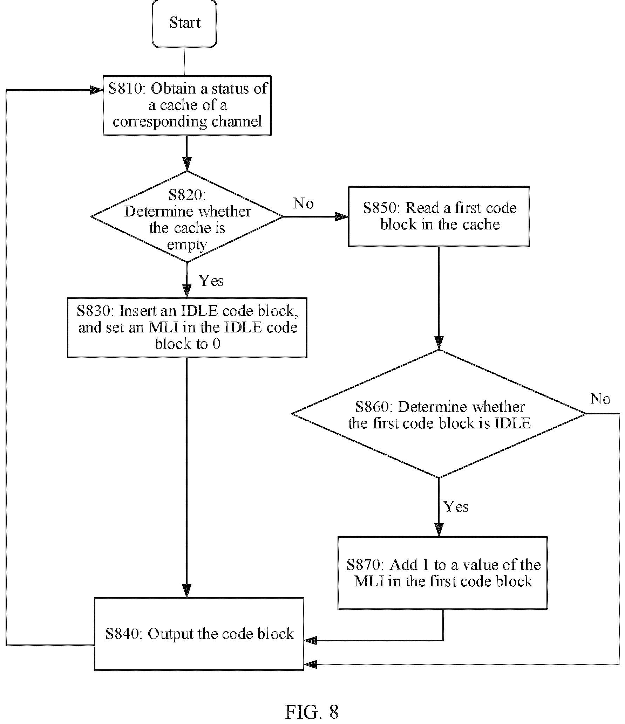

In addition, after the service data is encapsulated to obtain a data frame, a rate matching procedure may be performed: inserting a rate adaptation code block into the data frame for rate matching, to obtain a first code stream. The following describes the rate matching procedure in detail with reference to FIG. 8. Details are not described herein.

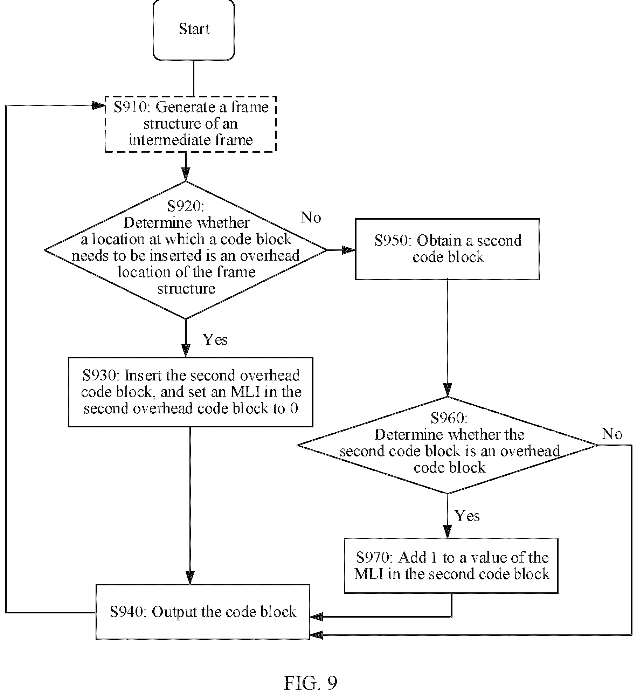

After the first code stream is obtained through rate matching, the timeslot multiplexing procedure may be performed: performing timeslot multiplexing based on the first code stream and at least one second code stream to obtain the intermediate frame, where the 1^{st} column of the intermediate frame is a second overhead code block, and the second overhead code block is used to manage the first code stream and the at least one second code stream. The following describes the timeslot multiplexing procedure in detail with reference to FIG. 9. Details are not described herein.

It should be understood that sizes of the data code block and the first overhead code block in the foregoing service data encapsulation, the rate adaptation code block in the rate matching procedure, and the second overhead code block in the timeslot multiplexing procedure are X bytes. In other words, the sizes of the code blocks (for example, the data code block, the rate adaptation code block, and the overhead code block) in each service data processing procedure are equal to a predefined size of the code block, so that the service data is processed at a uniform code block processing granularity, and the complexity of service data processing is reduced.

The code block in this embodiment includes first information, and the first information indicates a code block type to which the code block belongs. Further, when the code block is the overhead code block or the rate adaptation code block, the code block further includes second information. The second information indicates a timeslot multiplexing layer at which the code block is located. In other words, although the size of the code block is uniformly defined, to distinguish between code blocks of different types and to distinguish whether a specific code block needs to be processed, the code block carries information indicating the code block type, and optionally further carries information indicating the timeslot multiplexing layer at which the code block is located. This helps a device identify the code blocks of different code block types, and determine whether processing needs to be performed on the code block (for example, deleting the code block or subtracting 1 from a value of second information of the code block).

In this embodiment, "when a code block type of a code block is an overhead code block or a rate adaptation code block" may be understood as follows: When the code block type of the code block is the overhead code block or the rate adaptation code block, "when..." and "in a case in which..." in this embodiment have a same meaning, and may be used interchangeably.

In addition, information (for example, the first information and the second information) included in the code block in this embodiment may be understood as information included in the code block, information carried in the code block, information born in the code block, or the like. In a possible implementation, the first information includes two parts. One part indicates whether the code block is a data block or a non-data block, and the other part indicates a specific type of the code block as the non-data block. For example, the first information includes first indication information and second indication information.

The first indication information indicates whether the code block is the data code block or the non-data code block. For example, the first indication information occupies three bits. When a value of the three bits is 000, it indicates that the code block is the data code block. When the value of the three bits is 111, it indicates that the code block is the non-data code block.

Optionally, when the value of the first indication information is a value other than 000 and 111, it is considered that the code block is an abnormal code block. Optionally, the first indication information has an error correction capability. For example, a majority decision is made to support the error correction capability. For example, in the three bits occupied by the first indication information, when bits with a value of 0 are more than bits with a value of 1 (for example, the value of the first indication information is 000, 010, 100, or 001), the first indication information indicates that the code block is the data code block; or when bits with a value of 0 are fewer than bits with a value of 1 (for example, the value of the first indication information is 111, 110, 101, or 011), the first indication information indicates that the code block is the non-data code block.

Optionally, the first indication information may be referred to as a block type (Block Type, BLK_T). A specific name of the information is not limited in this embodiment, provided that an information function can be implemented.

The second indication information indicates whether the code block whose type is the non-data code block is specifically the overhead code block or the rate adaptation code block. For example, the second indication information may occupy 4 to 8 bits, and is used to extend definitions of different types of non-data code blocks. It should be understood that there are a plurality of code block types of non-data code blocks. For ease of understanding, two types of non-data code blocks are defined in this embodiment: the overhead code block and the rate adaptation code block. For example, when a value of the second indication information is 0, it indicates that the code block is the overhead code block; or when a value of the second indication information is 1, it indicates that the code block is the rate adaptation code block.

Optionally, the second indication information has an error correction capability. For example, retransmission of the second indication information may be performed for a plurality of times, and a same value used for a larger quantity of times in the plurality of times of transmission is used as the value of the second indication information. For another example, error correction code (Error Correction Code, ECC) verification is added during transmission of the second indication information, and the ECC verification is used to verify the second indication information.

Optionally, the second indication information may be referred to as an overhead type (O_TYPE).

In another possible implementation, the first information is a piece of indication information indicating that the code block is the data code block, the overhead code block, or the rate adaptation code block. For example, the first information occupies two bits. When a value of the two bits is 00, it indicates that the code block is the data code block. When the value of the two bits is 11, it indicates that the code block is the overhead code block. When the value of the two bits is 01, it indicates that the code block is the rate adaptation code block.

It can be learned from the foregoing that a function of the first information in the code block may be implemented in different manners, and this improves flexibility of the solution. It should be understood that the foregoing different manners of the first information are merely an example, and the quantity of bits occupied by the first information is also merely an example, and does not constitute any limitation on the protection scope of this application. The first information may alternatively be represented in another form, provided that the code block type can be indicated. For example, the first information is a piece of indication information occupying 7 to 11 bits. For another example, the first information includes at least two pieces of indication information, and different pieces of indication information each indicate whether the type of the code block is the data code block, the overhead code block, or the rate adaptation code block. For ease of description, the following uses an example in which the first information includes the foregoing first indication information and second indication information for description.

Specifically, the second information indicates the timeslot multiplexing layer at which the code block is located. When the value of the second information is 0, the second information indicates an outermost timeslot multiplexing layer. When the value of the second information is 1, the second information indicates a second outermost timeslot multiplexing layer. By analogy, a larger value of the second information indicates a deeper timeslot multiplexing layer and more times of timeslot multiplexing performed on the service data.

For example, when the value of the second information is 0, it indicates that the timeslot multiplexing layer at which the code block is located is the outermost layer, and a device that receives the code block needs to process the code block; or when the value of the second information is not 0 (for example, the value of the second information is greater than 0), it indicates that the code block is not a code block that needs to be processed at a current layer, and a device that receives the code block does not need to process the code block. In this case, the second information may alternatively be understood as information indicating the device that processes the code block. For example, the device that receives the code block may determine, based on the second information included in the code block, whether the code block needs to be processed. For example, when receiving the code block, a receiving end device determines that the code block is the overhead code block or the rate adaptation code block, the value of the second information in the code block is 0, indicating that the receiving end device needs to process the code block, and the receiving end device deletes the code block; or the value of the second information in the code block is not 0, indicating that the receiving end device does not need to process the code block, and the receiving end device only transmits the code block to a next-hop device for processing after subtracting 1 from the value of the second information in the code block.

In addition, the second information may be further understood as being used to support identifying a timeslot multiplexing layer at which the code block is located in a timeslot multiplexing manner of nested timeslot multiplexing. It should be noted that the timeslot multiplexing manner of nested timeslot multiplexing in this embodiment indicates that timeslot multiplexing may be performed on the service data for a plurality of times by a plurality of devices.

For example, a device #1 performs timeslot multiplexing on service data #1 and service data #2 once, specifically including: The device #1 performs encapsulation and rate matching on the service data #1 by code block to obtain a code stream #1, performs encapsulation and rate matching on the service data #2 by code block to obtain a code stream #2, and performs timeslot multiplexing on the code stream #1 and the code stream #2 to obtain an intermediate frame #1. A device #2 performs timeslot multiplexing on service data #3 and service data #4 once, specifically including: The device #2 performs encapsulation and rate matching on the service data #3 by code block to obtain a code stream #3, performs encapsulation and rate matching on the service data #4 by code block to obtain a code stream #4, and performs timeslot multiplexing on the code stream #3 and the code stream #4 to obtain an intermediate frame #2. The intermediate frame #1 and the intermediate frame #2 may be used as timeslot multiplexing objects of a device #3. That the device #3 performs one more time of timeslot multiplexing on results of the timeslot multiplexing performed by the device #1 and the device #2 may be understood as nested timeslot multiplexing.

It should be noted that in a procedure of the one more time of timeslot multiplexing, an overhead code block and a rate adaptation code block in a procedure of a previous time of timeslot multiplexing are processed as special data code blocks. In other words, parsing processing is not performed on the overhead code block and the rate adaptation code block, but 1 is added to each of values of second information in the overhead code block and the rate adaptation code block, indicating that a timeslot multiplexing layer of the overhead code block and the rate adaptation code block is increased by 1 in the current timeslot multiplexing procedure. Alternatively, in a procedure of the one more time of timeslot demultiplexing, an overhead code block and a rate adaptation code block in a procedure of a previous time of timeslot demultiplexing are processed as special data code blocks. In other words, the overhead code block and the rate adaptation code block are not deleted, but 1 is subtracted from each of values of second information in the overhead code block and the rate adaptation code block, indicating that a timeslot multiplexing layer of the overhead code block and the rate adaptation code block is decreased by 1 in the current timeslot multiplexing procedure.

For example, that the second information indicates the timeslot multiplexing layer at which the code block is located may be further understood as follows: The second information is used to identify the overhead code block or the rate adaptation code block in different timeslot multiplexing procedures in the timeslot multiplexing manner of nested timeslot multiplexing. Alternatively, that the second information indicates the timeslot multiplexing layer at which the code block is located may be further understood as follows: In a timeslot multiplexing procedure, the second information of the code block indicates a quantity of times for which the code block is used as the overhead code block or the rate adaptation code block. For example, in a procedure of the one more time of timeslot multiplexing, if it is determined that a specific code block in a result of a previous time of timeslot multiplexing is the overhead code block or the rate adaptation code block, 1 may be added to a value of second information of the code block, indicating that a quantity of times for which the code block is used as the overhead code block or the rate adaptation code block is increased by 1. Alternatively, that the second information indicates the timeslot multiplexing layer at which the code block is located may be understood as follows: In a timeslot demultiplexing procedure, the second information of the code block indicates a quantity of times for which transmission of the code block as the overhead code block or the rate adaptation code block further needs to be performed before the code block is deleted. For example, in a procedure of the one more time of timeslot demultiplexing, if it is determined that a specific code block in a result of a previous time of timeslot demultiplexing result is the overhead code block or the rate adaptation code block, 1 may be subtracted from a value of second information of the code block, indicating that a quantity of times for which transmission of the code block as the overhead code block or the rate adaptation code block further needs to be performed is decreased by 1.

For ease of understanding, the following uses an example to describe how the second information identifies the timeslot multiplexing layer at which the overhead code block or the rate adaptation code block is located.

For example, the device #1 performs encapsulation, rate matching, and timeslot multiplexing on the received service data #1 to obtain the intermediate frame #1. Specifically, in a rate matching and timeslot multiplexing process, a code block #1 is inserted as a rate adaptation code block inserted for the first time, and a value of second information in the code block #1 is 0; and a code block #2 is inserted as an overhead code block inserted for the first time, and a value of second information in the code block #2 is 0.

In other words, the code block #1 and the code block #2 are located at a first layer (or referred to as an outermost layer) of timeslot multiplexing. The code block #1 and the code block #2 are respectively the rate adaptation code block and the overhead code block that are used at the first timeslot multiplexing layer.

Further, a result of timeslot multiplexing performed by the device #1 may be used as a timeslot multiplexing object of another device (for example, the device #3). The device #3 performs encapsulation, rate matching, and timeslot multiplexing on the received intermediate frame #1 to obtain an intermediate frame #3. Specifically, in a rate matching and timeslot multiplexing procedure, a code block #3 is inserted as a rate adaptation code block inserted for the first time in the timeslot multiplexing procedure performed by the device #3, a value of second information in the code block #3 is 0, a code block #4 is inserted as an overhead code block inserted for the first time in the timeslot multiplexing procedure performed by the device #3, and a value of second information in the code block #4 is 0.

For the code block #1 and the code block #2 in the intermediate frame #1, the device #3 may directly output the code block #1 and the code block #2 after adding 1 to each of the values of the second information in the code block #1 and the code block #2. In this case, the values of the second information of the code block #1 and the code block #2 each are 1, indicating that after the device #3 performs timeslot multiplexing, the code block #1 and the code block #2 are at a second timeslot multiplexing layer.

It should be understood that the foregoing descriptions of the second information are merely an example, and do not constitute any limitation on a meaning of the second information. There may be alternatively other understanding about the second information, provided that in the timeslot multiplexing manner of nested timeslot multiplexing, the second information can identify a timeslot multiplexing layer at which a specific overhead code block or rate adaptation code block is located.

For example, the second information occupies n bits, and a value range of the second information is 0 to 2ⁿ. When the second information is 0, it indicates that the code block is located at the outermost timeslot multiplexing layer; when the second information is 1, it indicates the second outermost timeslot multiplexing layer, ...; and when the second information is 2ⁿ, it indicates an innermost timeslot multiplexing layer. A larger value of the second information indicates a deeper timeslot multiplexing layer and more times of timeslot multiplexing performed on the service data. In this embodiment, there may be a plurality of values of the second information, and nested timeslot multiplexing of different layers is supported.

Optionally, n may be any positive integer from 1 to 8.

Optionally, the second information may be referred to as a multiplexing layer indication (Multiplexing layer indication, MLI). The MLI may have an error correction capability. For example, retransmission of the MLI may be performed for a plurality of times, and a same value used for a larger quantity of times in the plurality of times of transmission is used as the value of the MLI. For another example, ECC verification is added during MLI transmission, and the ECC is used to verify the MLI.

Optionally, in addition to the first information and the second information, the code block may further include a reserved bit (reserved for future international standardization, RES), so that a meaning of the code block is further extended in a subsequent protocol development process. The reserved bit is not limited in this embodiment.

For ease of understanding, different types of code blocks in this embodiment are described in detail with reference to FIG. (a) to FIG. (c) in FIG. 7. (a) in FIG. 7 shows a data code block. It can be learned from (a) in FIG. 7 that a value of first indication information in the data code block is 000, indicating that the code block is the data code block. (b) in FIG. 7 shows an overhead code block. It can be learned from (b) in FIG. 7 that a value of first indication information in the data code block is 111, indicating that the code block is a non-data code block; and a value of second indication information is 0, indicating that the code block is the overhead code block. (c) in FIG. 7 shows a rate adaptation code block. It can be learned from (c) in FIG. 7 that a value of first indication information in the data code block is 111, indicating that the code block is a non-data code block; and a value of second indication information is 1, indicating that the code block is the rate adaptation code block.

Specifically, the foregoing describes in detail definitions of the code blocks in this embodiment with reference to FIG. 7. The following describes in detail how to perform, based on the code block, rate matching and timeslot multiplexing processing on the data frame obtained by encapsulating the service data to obtain the intermediate frame.

In addition, it should be noted that in this embodiment, an example in which the transmitting end device processes specific service data is used for description. For other service data, a manner in which the transmitting end device processes the other service data is the same as the foregoing manner in which the transmitting end device processes the specific service data, and details are not described herein again.

For example, after receiving service data #1 from a customer device #1 and service data #2 from a customer device #2, the transmitting end device separately performs encapsulation, rate matching, and timeslot multiplexing on the service data #1 and the service data #2 by code block to obtain an intermediate frame. Timeslot multiplexing may be understood as performing timeslot multiplexing on a plurality of pieces of service data.

It should be understood that in this embodiment, for different service granularities, timeslot multiplexing granularities from a lower order to a higher order are the same (for example, timeslot multiplexing processing is performed all by using a code block size as a granularity). Compared with complexity of conventional hybrid timeslot multiplexing of a plurality of service granularities, complexity of hybrid timeslot multiplexing of the plurality of service granularities can be reduced. For example, in a conventional OTN device, for different service granularities, timeslot multiplexing granularities from a lower order to a higher order are different. For example, multiplexing of an ODUO timeslot to an ODU4 is performed at a granularity of 1 byte, multiplexing of an ODU1 timeslot to the ODU4 is performed at a granularity of 2 bytes, ..., and multiplexing of an ODUflex80 timeslot to the ODU4 is performed at a granularity of 80 bytes. Timeslot multiplexing corresponding to different service data is different, and complexity of multiplexing to the ODU4 in the case of a plurality of hybrid service granularities is rather high.

That the transmitting end device processes the service data in the basic unit of the code block to obtain the intermediate frame includes the following procedures.

Procedure 1: Performing rate adaptation on the data frame obtained by encapsulating the service data.

It should be noted that a procedure before timeslot multiplexing is a rate adaptation procedure, in other words, before performing timeslot multiplexing on a plurality of pieces of received service data, a device performs rate matching on a plurality of data frames obtained by encapsulating the plurality of pieces of service data. It may be understood that the device has a rate matching module and a timeslot multiplexing module, and an input of the timeslot multiplexing module is an output of the rate matching module. In other words, a code block participating in timeslot multiplexing is a code block obtained after rate matching.

For ease of understanding, the rate adaptation procedure is described in detail with reference to FIG. 8. FIG. 8 is a schematic flowchart of rate adaptation according to an embodiment of this application. The rate adaptation includes the following steps.

S810: Obtain a status of a cache of a corresponding channel.

The corresponding channel is a channel from which a timeslot multiplexing module needs to obtain a code block. Specifically, the channel may be understood as a cache allocated to specific service data, and the service data may be service data corresponding to a code stream on which the timeslot multiplexing module performs timeslot multiplexing.

Specifically, different service data may correspond to different channels. For example, the current timeslot multiplexing module needs to perform timeslot multiplexing on a code stream #1 corresponding to a data frame #1 and a code stream #2 corresponding to a data frame #2. The data frame #1 is a data frame obtained by encapsulating service data #1, the service data #1 corresponds to a timeslot #1, a timeslot #2, and a timeslot #3, and a preconfigured timeslot configuration table indicates that the timeslot #1, the timeslot #2, and the timeslot #3 correspond to a channel #1. The data frame #2 is a data frame obtained by encapsulating service data #2, the service data #2 corresponds to a timeslot #4, a timeslot #5, and a timeslot #6, and the preconfigured timeslot configuration table indicates that the timeslot #4, the timeslot #5, and the timeslot #6 correspond to a channel #2. In this way, the timeslot multiplexing module needs to obtain the code block from the channel #1 and the channel #2.

When the timeslot multiplexing module needs to obtain the code block from the channel #1, a rate matching module first determines a status of a cache of the channel #1.

S820: Determine whether the status of the cache is empty.

When the status of the cache is empty (for example, when a bandwidth of service data is less than a timeslot bandwidth allocated to the service data, a cache corresponding to the service data is intermittently empty, indicating that the service data is insufficient to fill the timeslot allocated to the service data), S830 is performed: insert an IDLE code block, and set an MLI in the IDLE code block to 0; and S840 is performed: output the code block.

When the status of the cache is not empty (for example, when the service data first arrives at the rate adaptation module and is not read by the timeslot multiplexing module in time), S850 is performed: read a first code block in the cache; and S860 is performed: determine whether a code block type of the first code block is IDLE.

It should be understood that the first code block may be any code block cached in the cache.

When the code block type of the first code block is IDLE, S870 is performed: add a value of the MLI in the first code block by 1; and S840 is performed.

When the code block type of the first code block is not IDLE, S840 is directly performed.

S810 to S870 continue to be performed to perform rate adaptation.

It can be learned from the rate adaptation procedure shown in FIG. 8 that, in the rate adaptation process, a value of second information in a rate adaptation code block is set, indicating a device that receives the rate adaptation code block to determine whether the rate adaptation code block needs to be processed. For example, when learning that the value of the second information of the rate adaptation code block is 0, the device that receives the rate adaptation code block determines to delete the rate adaptation code block. For another example, when learning that the value of the second information of the rate adaptation code block is not 0, the device that receives the rate adaptation code block determines that the rate adaptation code block does not need to be deleted. A procedure of processing the rate adaptation code block by the device that receives the rate adaptation code block is described in detail in a subsequent procedure of deleting a rate adaptation code block by a receiving end device. Details are not described herein.

It should be understood that outputting the code block in step S840 in FIG. 8 may be understood as outputting the code block to the timeslot multiplexing module, and implementing timeslot multiplexing by the timeslot multiplexing module. In addition, the procedure shown in FIG. 8 is always executed cyclically, in other words, each module in a chip in an OTN device may always execute a task when being powered on.

Further, in addition to the foregoing rate adaptation procedure, to implement timeslot multiplexing, the following Procedure 2 needs to be performed: performing timeslot multiplexing.

For ease of understanding, a timeslot multiplexing procedure is described in detail with reference to FIG. 9. FIG. 9 is a schematic flowchart of timeslot multiplexing according to an embodiment of this application. The timeslot multiplexing includes the following steps.

S910: Generate a frame structure of an intermediate frame.

Specifically, the structure of the intermediate frame of a service layer is periodically generated based on a configured bandwidth size of the service layer. For example, the frame structure of the intermediate frame in this embodiment is similar to a frame structure of the foregoing data frame (as shown in FIG. 6), and an M-column data structure is established based on an X-byte code block, where each column may be understood as a code block. The 1^{st} column is used as a second overhead code block column, the other columns are used as data code block columns, a data code block is used to carry service data, and a second overhead code block is used to manage the data code block.

S920: Determine whether a location at which a code block needs to be inserted is an overhead location of the frame structure.

If the location at which the code block needs to be inserted in a timeslot multiplexing process is the overhead location of the frame structure, S930 is performed: insert the second overhead code block, and set an MLI in the second overhead code block to 0; and S940 is performed: output the code block.

If the location at which the code block needs to be inserted in the timeslot multiplexing procedure is a payload location of the frame structure, S950 is performed: Determine an identifier of a timeslot corresponding to the payload location, query a timeslot configuration table based on the identifier of the timeslot to obtain an identifier of a channel, and obtain a second code block from the corresponding channel. It should be understood that the second code block may be any code block obtained from the channel.

The channel may be understood as a cache allocated to first service data, and the first service data includes service data corresponding to a code stream that participates in timeslot multiplexing. For example, the first service data includes a code block stream obtained by encapsulation processing, and/or a data stream obtained by timeslot multiplexing performed by a previous-hop node.

S960: Determine whether a code block type of the second code block is an overhead code block.

If the second code block is the overhead code block, S970 is performed: add a value of the MLI in the second code block by 1, where MLI = MLI + 1; and S940 is performed.

If the second code block is not the overhead code block, S940 is directly performed.

S910 to S970 continue to be performed, to complete timeslot multiplexing.

It can be learned from the timeslot multiplexing procedure shown in FIG. 9 that, in the timeslot multiplexing process, a value of second information in an overhead code block is set, indicating a device that receives the overhead code block to determine whether the overhead code block needs to be processed. For example, when learning that the value of the second information of the overhead code block is 0, the device that receives the overhead code block determines to delete the overhead code block. For another example, when learning that the value of the second information of the overhead code block is not 0, the device that receives the overhead code block determines that the overhead code block does not need to be deleted. A procedure of processing the overhead code block by the device that receives the overhead code block is described in detail in a subsequent timeslot demultiplexing procedure performed by a receiving end device. Details are not described herein.

The foregoing describes in detail the procedure in which the transmitting end device receives the service data and performs encapsulation, rate matching, and timeslot multiplexing on the service data by code block to obtain the intermediate frame. Further, after obtaining the intermediate frame, the transmitting end device maps the intermediate frame that carries the service data to an OTN frame.

S430: The transmitting end device maps the intermediate frame that carries the service data to the OTN frame.

Specifically, the overhead code block, the data code block, and the rate adaptation code block included in the intermediate frame are encapsulated into a payload area of the OTN frame in a code block-by-code sequence by code block. In addition, a piece of first frame header location indication information (OPTR) of the intermediate frame is inserted in a first row, columns 15, and 16 in a payload overhead area of the OTN frame to indicate a location of first O code in the OTN frame.

After the intermediate frame is mapped to the OTN frame, the OTN frame may be sent to the receiving end device.

S440: The transmitting end device sends the OTN frame to the receiving end device, or the receiving end device receives the OTN frame from the transmitting end device.

Specifically, it can be learned from the foregoing descriptions that the OTN frame is used to carry the intermediate frame that carries service data, and the intermediate frame is obtained in a processing manner of processing the service data performed by code block. The foregoing has described in detail the processing manner performed by code block, and details are not described herein again.

In this embodiment, the receiving end device may be the sink processing device in FIG. 5, or may be the intermediate device (for example, the switching node shown in FIG. 5). In this embodiment, a role played by the receiving end device in the overall service data processing procedure is not limited. A device that needs to perform timeslot demultiplexing and rate adaptation code block deletion in the overall service data processing procedure may be understood as the receiving end device.

In a possible implementation, when the receiving end device is the sink end processing device, the OTN frame received by the receiving end device may be understood as an OTN frame obtained by timeslot multiplexing processing performed by the transmitting end device and the intermediate device.

In another possible implementation, when the receiving end device is the intermediate device, the OTN frame received by the receiving end device may be understood as an OTN frame received by the intermediate device from the previous-hop node.

After receiving the OTN frame, the receiving end device needs to recover the service data.

S450: The receiving end device obtains the service data from the OTN frame by code block.

Specifically, after receiving the OTN frame, the receiving end device needs to perform timeslot demultiplexing, rate adaptation code block deletion, and decapsulation to obtain the service data from the OTN frame. After receiving the OTN frame, in a process of obtaining the service data from the OTN frame, the receiving end device ensures that the code block is used as a granularity in different processing procedures (for example, encapsulation, rate matching, and timeslot multiplexing) for obtaining the service data. This reduces complexity of obtaining the service data.

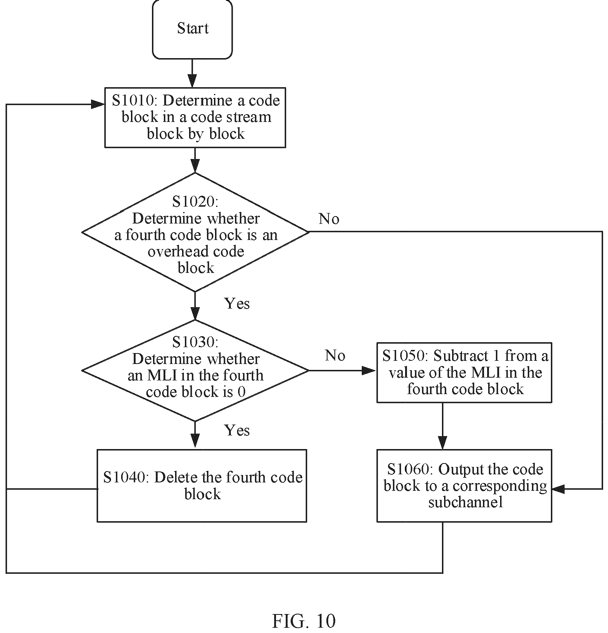

That the receiving end device performs timeslot demultiplexing by code block after receiving the OTN frame may be understood as follows: A location of the second overhead code block included in the intermediate frame is obtained based on the first frame header location indication information OPTR of the intermediate frame included in the payload overhead area of the OTN frame, mapping relationships between code blocks and services in different code streams are obtained based on a multiplexing identifier MSI in the second overhead code block, and timeslot demultiplexing is performed on a plurality of code streams to obtain a first code stream and at least one second code stream. The following describes a timeslot demultiplexing procedure in detail with reference to FIG. 10, and details are not described herein.

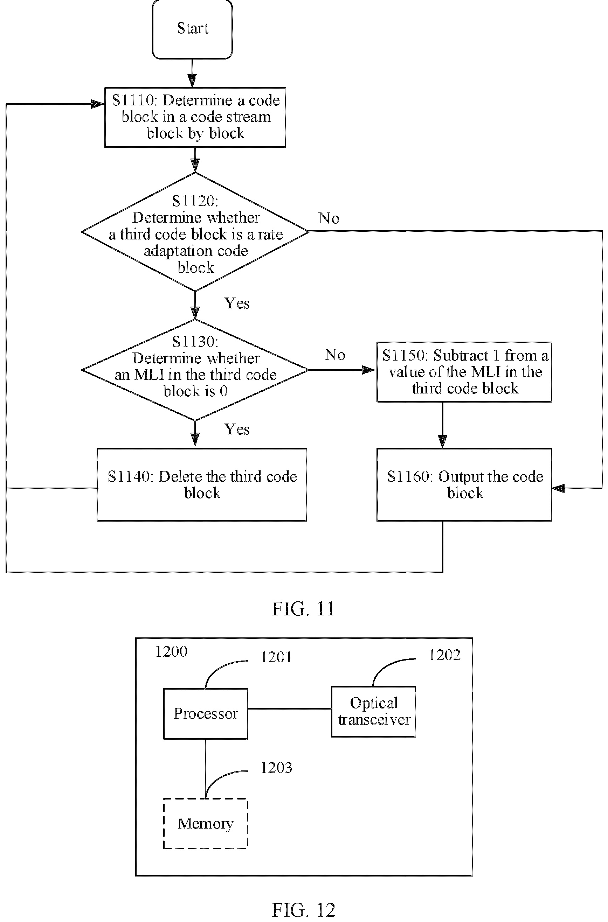

In addition, after timeslot demultiplexing is performed to obtain the code streams, a rate adaptation code block deletion procedure may be separately performed on the different code streams: deleting the rate adaptation code block from the first code stream, and obtaining a data frame corresponding to the service data, where the data frame includes one or more data code blocks corresponding to the service data, the 1^{st} column of the data frame is a first overhead code block, and the first overhead code block is used to manage the one or more data code blocks. The following describes the rate adaptation code block deletion procedure in detail with reference to FIG. 11, and details are not described herein.

Further, after the data frames corresponding to the different service data are obtained, the data code blocks corresponding to the service data may be obtained only by deleting the overhead code blocks in the data frames.

FIG. 10 is a schematic flowchart of timeslot demultiplexing according to an embodiment of this application. The method includes the following steps.

S1010: Determine a code block in a code stream block by block.

S1020: Determine whether a fourth code block is an overhead code block.

It should be understood that the fourth code block may be any code block in the code stream.

If the fourth code block is the overhead code block, S1030 is performed: Determine whether an MLI in the fourth code block is 0. When MLI = 0, S1040 is performed: Delete the fourth code block.

When the MLI is not equal to 0, S1050 is performed: subtract 1 from the MLI in the fourth code block; and S1060 is performed: determine an identifier of a timeslot corresponding to the fourth code block, query a timeslot configuration table, and output the fourth code block to a corresponding subchannel.

If the fourth code block is not the overhead code block, S1060 is directly performed.

S1010 to S1060 continue to be performed, to complete timeslot demultiplexing.

It can be learned from the timeslot demultiplexing shown in FIG. 10 that, in the timeslot demultiplexing procedure, the receiving end device may determine, based on a value of second information in an overhead code block, whether to delete the overhead code block, or determine whether to transmit the overhead code block to a next-hop node for processing.

FIG. 11 is a schematic flowchart of rate adaptation code block deletion according to an embodiment of this application. The method includes the following steps.

S1110: Determine a code block in a code stream block by block.

S1120: Determine whether a third code block in the code stream is a rate adaptation code block.

It should be understood that the third code block may be any code block in the code stream.

If the third code block is the rate adaptation code block, S1130 is performed: Determine whether an MLI in the third code block is 0. When MLI = 0, S1140 is performed: Delete the third code block.

When the MLI is not equal to 0, S1150 is performed: subtract the MLI in the third code block by 1; and S1160 is performed: output the code block.

If the third code block is not the rate adaptation code block, S1160 is directly performed.

S1110 to S1160 continue to be performed, to complete the rate adaptation code block deletion.

It can be learned from the rate adaptation code block deletion shown in FIG. 11 that, in the rate adaptation code block deletion procedure, a receiving end device may determine, based on a value of second information in a rate adaptation code block, whether to delete the rate adaptation code block, or determine whether to transmit the rate adaptation code block to a next-hop node for processing.

In the embodiment shown in FIG. 4, in processing procedures of different service data, a uniform code block is defined, so that complexity of service data processing can be reduced. For example, multiplexing of an ODUO timeslot to an ODU4 is performed at a granularity of 64 bytes, multiplexing of an ODU1 timeslot to the ODU4 is performed at the granularity of 64 bytes, ..., and multiplexing of an ODUflex80 timeslot to the ODU4 is performed at the granularity of 64 bytes. Timeslot multiplexing corresponding to different service data is the same, and complexity of multiplexing to the ODU4 in the case of a plurality of hybrid service granularities is reduced.

In addition, in the embodiment shown in FIG. 4, the code block that is defined in the uniform size has a plurality of possible sizes, for example, may be 64, 128, 192, 240, or 256 bytes, so that different transmission granularities can be provided.

Further, the timeslot multiplexing manner of nested timeslot multiplexing is proposed for timeslot multiplexing, and this simplifies large-scale scheduled timeslot multiplexing processing.

It should be understood that a specific example shown in FIG. 4 in embodiments of this application is merely intended to help a person skilled in the art better understand embodiments of this application, but is not intended to limit the scope of embodiments of this application. It should be understood that sequence numbers of the foregoing processes do not mean a sequence of performing the processes. The sequence of performing the processes should be determined based on functions and internal logic of the processes, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

For example, in the embodiment shown in FIG. 4, an example in which all procedures (for example, encapsulation, rate matching, and timeslot multiplexing) in which the transmitting end device processes the received service data (for example, the service data #1 and the service data #2) are at a uniform code block granularity for description. On a premise of accepting specific complexity, the foregoing procedure of encapsulating the service data may not be based on the uniform code block granularity, but a manner of encapsulating the service data in a conventional technology is used, provided that the uniform code block granularity is used in the procedures of rate matching and timeslot multiplexing on the data frame obtained by encapsulating the service data.

For another example, in the embodiment shown in FIG. 4, the transmitting end device processes different service data based on the uniform code block granularity. When different service data bandwidth sizes are considered, different service data may be processed based on different code block granularities. In other words, different service data is classified into service data of different bandwidth types based on bandwidth sizes (for example, service data whose bandwidth is less than 10 Mbps is referred to as small-bandwidth service data, and service data whose bandwidth is greater than or equal to 10 Mbps is referred to as large-bandwidth service data), and the different code block granularities are designed for the service data of different bandwidth types. For example, service data #1 is small-bandwidth service data, and may be processed based on a code block #1. Service data #2 is large-bandwidth service data, and may be processed based on a code block #2. A size of the code block #1 is less than a size of the code block #2 (for example, the code block #1 is 64 bytes, and the code block #2 is 256 bytes). In other words, a plurality of code blocks of different sizes may be predefined in the system.

It should be further understood that in some of the foregoing embodiments, a device (for example, an OTN device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by devices (for example, the receiving end device and the transmitting end device) may also be implemented by components (for example, a chip or a circuit) that can be used in the devices.

The foregoing describes in detail the service data processing method provided in embodiments of this application with reference to FIG. 4. The foregoing service data processing method is mainly described from the perspective of interaction between the receiving end device and the transmitting end device. It may be understood that, to implement the foregoing functions, the receiving end device and the transmitting end device include corresponding hardware structures and/or software modules for performing the functions.

The following describes in detail a communication apparatus provided in an embodiment of this application with reference to FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitting end device or receiving end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 12 is a diagram of a possible structure of a device. As shown in FIG. 12, a device 1200 includes a processor 1201, an optical transceiver 1202, and a memory 1203. The memory 1203 is optional. The device 1200 may be used in a transmitting side device (for example, the device 1200 may be the foregoing transmitting end device) or a receiving side device (for example, the network device 1200 may be the foregoing receiving end device).

When the device 1200 is used in the transmitting side device, the processor 1201 and the optical transceiver 1202 are configured to implement the method performed by the transmitting end device shown in FIG. 4. In an implementation procedure, steps of processing process may be performed by using a hardware integrated logic circuit in the processor 1201, or instructions in a form of software, to complete the method performed by the transmitting device in the foregoing accompanying drawings. The optical transceiver 1202 is configured to receive an OTN frame sent by the processor 1201 to a peer device (also referred to as a receiving end device).

When the device 120 is used in the receiving side device, the processor 1201 and the optical transceiver 1202 are configured to implement the method performed by the receiving end device shown in FIG. 4. In an implementation procedure, steps of processing process may be performed by using a hardware integrated logic circuit in the processor 1201, or instructions in a form of software, to complete the method performed by the receiving side device in the foregoing accompanying drawings. The optical transceiver 1202 is configured to receive an OTN frame sent by a peer device (also referred to as a transmitting end device), and send the OTN frame to the processor 1201, so that the processor 1201 performs subsequent processing.

The memory 1203 is configured to store instructions, so that the processing 1201 may be configured to perform the steps mentioned in the foregoing figures. Alternatively, the memory 1203 is configured to store other instructions, to configure a parameter of the processor 1201 to implement a corresponding function.

It should be noted that, in a diagram of a hardware structure of a network device shown in FIG. 2, the processor 1201 and the memory 1203 may be located in a tributary board, or may be located in a tributary-line integrated board. Alternatively, there are a plurality of processor 1201 and memory 1203, which are respectively located on a tributary board and a line board, and the two boards cooperate to complete the foregoing method steps.

It should be noted that the apparatus in FIG. 12 may also be configured to perform the method steps involved in the variations of the embodiments shown in the foregoing accompanying drawings. Details are not described herein again.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, for example, a USB flash drive, a removable hard disk, a read-only memory, a random access memory, a magnetic disk, or an optical disc.

Based on the foregoing embodiments, an embodiment of this application further provides a chip. The chip includes a processor, configured to implement functions in any one or more of the foregoing embodiments, for example, obtain or process the OTN frame in the foregoing method. Optionally, the chip further includes a memory, and the memory is configured to store necessary program instructions and data to be executed by the processor. The chip may include a chip, or include a chip and another discrete device.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to embodiments of this application without departing from the scope of embodiments of this application. This application is intended to cover these modifications and variations provided that they fall within the scope of protection defined by the following claims and their equivalent technologies.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following forms: static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

A person of ordinary skill in the art may be aware that units and steps in the examples described in the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service data processing method, comprising:
receiving service data;
performing encapsulation, rate matching, and timeslot multiplexing on the service data by code block to obtain an intermediate frame;
mapping the intermediate frame that carries the service data to an optical transport network OTN frame; and
sending the OTN frame, wherein a size of the code block is a plurality of bytes, the code block comprises first information, the first information indicates a code block type of the code block, when the code block type of the code block is an overhead code block or a rate adaptation code block, the code block further comprises second information, and the second information indicates a timeslot multiplexing layer at which the code block is located.

2. The method according to claim 1, wherein the first information comprises first indication information and second indication information, the first indication information indicates that the code block is a data code block or a non-data code block, and the second indication information indicates that the non-data code block is an overhead code block or a rate adaptation code block.

3. The method according to claim 1 or 2, wherein the second information occupies n bits, and n is any positive integer from 1 to 8.

4. The method according to any one of claims 1 to 3, wherein the performing encapsulation, rate matching, and timeslot multiplexing on the service data by code block to obtain an intermediate frame comprises:
dividing the service data into one or more data code blocks based on the size of the code block;
encapsulating the one or more data code blocks into a data frame, wherein the 1^{st} column of the data frame is a first overhead code block, and the first overhead code block is used to manage the one or more data code blocks;
inserting a rate adaptation code block into the data frame for rate matching, to obtain a first code stream; and
performing timeslot multiplexing based on the first code stream and at least one second code stream to obtain the intermediate frame, wherein the 1^{st} column of the intermediate frame is a second overhead code block, and the second overhead code block is used to manage the first code stream and the at least one second code stream, wherein
sizes of the data code block, the rate adaptation code block, the first overhead code block, and the second overhead code block are equal to the size of the code block.

5. The method according to claim 4, wherein the inserting a rate adaptation code block into the data frame for rate matching comprises:
determining a status of a cache allocated to the service data;
when the status of the cache is empty, inserting the rate adaptation code block, setting a value of second information of the inserted rate adaptation code block to 0, and outputting the rate adaptation code block;
when a first code block is cached in the cache, determining whether the first code block is a rate adaptation code block;
when the first code block is the rate adaptation code block, outputting the first code block after adding 1 to a value of second information of the first code block; and
when the first code block is not the rate adaptation code block, outputting the first code block.

6. The method according to claim 4 or 5, wherein the performing timeslot multiplexing based on the first code stream and at least one second code stream to obtain the intermediate frame comprises:
inserting the second overhead code block at an overhead location of the intermediate frame; or
determining an identifier of a timeslot corresponding to a payload location of the intermediate frame, and obtaining, based on a timeslot configuration table and the identifier of the timeslot, a second code block from a cache allocated to first service data;
when the second code block is an overhead code block, outputting the second code block after adding 1 to a value of second information in the second code block; and
when the second code block is not the overhead code block, outputting the second code block, wherein
the timeslot configuration table comprises a correspondence between an identifier of a timeslot and an identifier of the cache allocated to the first service data, and the first service data comprises the service data and service data corresponding to the at least one second code stream.

7. The method according to any one of claims 1 to 6, wherein the size of the code block is 64, 128, 192, 240, or 256 bytes.

8. A service data processing method, comprising:
receiving an optical transport network OTN frame, wherein the OTN frame is used to carry an intermediate frame that carries service data, and the intermediate frame is obtained by performing encapsulation, rate matching, and timeslot multiplexing on the service data by code block; and
performing timeslot demultiplexing, rate adaptation code block deletion, and decapsulation by code block to obtain the service data from the OTN frame, wherein
a size of the code block is a plurality of bytes, the code block comprises first information, and the first information indicates a code block type of the code block, wherein
when the code block type of the code block is an overhead code block or a rate adaptation code block, the code block further comprises second information, and the second information indicates a timeslot multiplexing layer at which the code block is located.

9. The method according to claim 8, wherein the first information comprises first indication information and second indication information, the first indication information indicates that the code block is a data code block or a non-data code block, and the second indication information indicates that the non-data code block is an overhead code block or a rate adaptation code block.

10. The method according to claim 8 or 9, wherein the second information occupies n bits, and n is any positive integer from 1 to 8.

11. The method according to any one of claims 8 to 10, wherein the performing timeslot demultiplexing, rate adaptation code block deletion, and decapsulation by code block to obtain the service data from the OTN frame comprises:
obtaining, based on first frame header location indication information OPTR of the intermediate frame comprised in a payload overhead area of the OTN frame, a location of a second overhead code block comprised in the intermediate frame;
obtaining mapping relationships between code blocks and services in different code streams based on a multiplexing identifier MSI in the second overhead code block, and performing timeslot demultiplexing on a plurality of code streams to obtain a first code stream and at least one second code stream; and
deleting the rate adaptation code block from the first code stream, and obtaining a data frame corresponding to the service data, wherein the data frame comprises one or more data code blocks corresponding to the service data, the 1^{st} column of the data frame is a first overhead code block, and the first overhead code block is used to manage the one or more data code blocks.

12. The method according to claim 11, wherein the deleting the rate adaptation code block from the first code stream comprises:
determining whether a third code block in the first code stream is a rate adaptation code block;
when the third code block is not the rate adaptation code block, outputting the third code block;
when the third code block is the rate adaptation code block, determining whether a value of second information of the third code block is 0;
when the value of the second information of the third code block is 0, deleting the third code block; and
when the value of the second information of the third code block is not 0, outputting the third code block after subtracting 1 from the value of the second information of the third code block.

13. The method according to claim 11 or 12, wherein the performing timeslot demultiplexing on a plurality of code streams comprises:
determining whether a fourth code block in the code streams is an overhead code block;
when the fourth code block is not the overhead code block, determining an identifier of a timeslot corresponding to the fourth code block, determining, based on a timeslot configuration table and the identifier of the timeslot, a cache allocated to first service data, and outputting the fourth code block to the cache;
when the fourth code block is the overhead code block, determining whether a value of second information of the fourth code block is 0;
when the value of the second information of the fourth code block is 0, deleting the fourth code block; and
when the value of the second information of the fourth code block is not 0, outputting the fourth code block to the cache after subtracting 1 from the value of the second information of the fourth code block, wherein
the timeslot configuration table comprises a correspondence between an identifier of a timeslot and an identifier of the cache allocated to the first service data, and the first service data comprises the service data and service data corresponding to the at least one second code stream.

14. The method according to any one of claims 8 to 13, wherein the size of the code block is 64, 128, 192, 240, or 256 bytes.

15. A service data processing apparatus, comprising:
a receiving unit, configured to receive service data;
a processing unit, configured to perform encapsulation, rate matching, and timeslot multiplexing on the service data by code block to obtain an intermediate frame, wherein
the processing unit is further configured to map the intermediate frame that carries the service data to an optical transport network OTN frame; and
a sending unit, configured to send the OTN frame, wherein
a size of the code block is a plurality of bytes, the code block comprises first information, the first information indicates a code block type of the code block,
when the code block type of the code block is an overhead code block or a rate adaptation code block, the code block further comprises second information, and the second information indicates a timeslot multiplexing layer at which the code block is located.

16. The apparatus according to claim 15, wherein the first information comprises first indication information and second indication information, the first indication information indicates that the code block is a data code block or a non-data code block, and the second indication information indicates that the non-data code block is an overhead code block or a rate adaptation code block.

17. The apparatus according to claim 15 or 16, wherein the second information occupies n bits, and n is any positive integer from 1 to 8.

18. The apparatus according to any one of claims 15 to 17, wherein that the processing unit performs encapsulation, rate matching, and timeslot multiplexing on the service data by code block to obtain the intermediate frame comprises:
the processing unit divides the service data into one or more data code blocks based on the size of the code block;
the processing unit encapsulates the one or more data code blocks into a data frame, wherein the 1^{st} column of the data frame is a first overhead code block, and the first overhead code block is used to manage the one or more data code blocks;
the processing unit inserts a rate adaptation code block into the data frame for rate matching, to obtain a first code stream; and
the processing unit performs timeslot multiplexing based on the first code stream and at least one second code stream to obtain the intermediate frame, wherein the 1^{st} column of the intermediate frame is a second overhead code block, and the second overhead code block is used to manage the first code stream and the at least one second code stream, wherein
sizes of the data code block, the rate adaptation code block, the first overhead code block, and the second overhead code block are equal to the size of the code block.

19. The apparatus according to claim 18, wherein that the processing unit inserts the rate adaptation code block into the data frame for rate matching comprises:
the processing unit determines a status of a cache allocated to the service data;
when the status of the cache is empty, the processing unit inserts the rate adaptation code block, sets a value of second information of the inserted rate adaptation code block to 0, and outputs the rate adaptation code block;
when a first code block is cached in the cache, the processing unit determines whether the first code block is a rate adaptation code block;
when the first code block is the rate adaptation code block, the processing unit outputs the first code block after adding 1 to a value of second information of the first code block; and
when the first code block is not the rate adaptation code block, the processing unit outputs the first code block.

20. The apparatus according to claim 18 or 19, wherein that the processing unit performs timeslot multiplexing based on the first code stream and the at least one second code stream to obtain the intermediate frame comprises:
the processing unit inserts the second overhead code block at an overhead location of the intermediate frame; or
the processing unit determines an identifier of a timeslot corresponding to a payload location of the intermediate frame, and obtains, based on a timeslot configuration table and the identifier of the timeslot, a second code block from a cache allocated to first service data;
when the second code block is an overhead code block, the processing unit outputs the second code block after adding 1 to a value of second information in the second code block; and
when the second code block is not the overhead code block, the processing unit outputs the second code block, wherein
the timeslot configuration table comprises a correspondence between an identifier of a timeslot and an identifier of the cache allocated to the first service data, and the first service data comprises the service data and service data corresponding to the at least one second code stream.

21. The apparatus according to any one of claims 15 to 20, wherein the size of the code block is 64, 128, 192, 240, or 256 bytes.

22. A service data processing apparatus, comprising:
a receiving unit, configured to receive an optical transport network OTN frame, wherein the OTN frame is used to carry an intermediate frame that carries service data, and the intermediate frame is obtained by performing encapsulation, rate matching, and timeslot multiplexing on the service data by code block; and
a processing unit, configured to perform timeslot demultiplexing, rate adaptation code block deletion, and decapsulation by code block to obtain the service data from the OTN frame, wherein
a size of the code block is a plurality of bytes, the code block comprises first information, and the first information indicates a code block type of the code block, wherein
when the code block type of the code block is an overhead code block or a rate adaptation code block, the code block further comprises second information, and the second information indicates a timeslot multiplexing layer at which the code block is located.

23. The apparatus according to claim 22, wherein the first information comprises first indication information and second indication information, the first indication information indicates that the code block is a data code block or a non-data code block, and the second indication information indicates that the non-data code block is an overhead code block or a rate adaptation code block.

24. The apparatus according to claim 22 or 23, wherein the second information occupies n bits, and n is any positive integer from 1 to 8.

25. The apparatus according to any one of claims 22 to 24, wherein that the processing unit performs timeslot demultiplexing, rate adaptation code block deletion, and decapsulation by code block to obtain the service data from the OTN frame comprises:
obtaining, by the processing unit, based on first frame header location indication information OPTR of the intermediate frame comprised in a payload overhead area of the OTN frame, a location of a second overhead code block comprised in the intermediate frame;
obtaining, by the processing unit, mapping relationships between code blocks and services in different code streams based on a multiplexing identifier MSI in the second overhead code block, and performing timeslot demultiplexing on a plurality of code streams to obtain a first code stream and at least one second code stream; and
the processing unit deletes the rate adaptation code block from the first code stream, and obtaining a data frame corresponding to the service data, wherein the data frame comprises one or more data code blocks corresponding to the service data, the 1^{st} column of the data frame is a first overhead code block, and the first overhead code block is used to manage the one or more data code blocks.

26. The apparatus according to claim 25, wherein that the processing unit deletes the rate adaptation code block in the first code stream comprises:
the processing unit determines whether a third code block in the first code stream is a rate adaptation code block;
when the third code block is not the rate adaptation code block, the processing unit outputs the third code block;
when the third code block is the rate adaptation code block, the processing unit determines whether a value of second information of the third code block is 0;
when the value of the second information of the third code block is 0, the processing unit deletes the third code block; and
when the value of the second information of the third code block is not 0, the processing unit outputs the third code block after subtracting 1 from the value of the second information of the third code block.

27. The apparatus according to claim 25 or 26, wherein that the processing unit performs timeslot demultiplexing on the plurality of code streams comprises:
the processing unit determines whether a fourth code block in the code streams is an overhead code block;
when the fourth code block is not the overhead code block, the processing unit determines an identifier of a timeslot corresponding to the fourth code block, determines, based on a timeslot configuration table and the identifier of the timeslot, a cache allocated to first service data, and outputting the fourth code block to the cache;
when the fourth code block is the overhead code block, the processing unit determines whether a value of second information of the fourth code block is 0;
when the value of the second information of the fourth code block is 0, the processing unit deletes the fourth code block; and
when the value of the second information of the fourth code block is not 0, the processing unit outputs the fourth code block to the cache after subtracting 1 from the value of the second information of the fourth code block, wherein
the timeslot configuration table comprises a correspondence between an identifier of a timeslot and an identifier of the cache allocated to the first service data, and the first service data comprises the service data and service data corresponding to the at least one second code stream.

28. The apparatus according to any one of claims 22 to 27, wherein the size of the code block is 64, 128, 192, 240, or 256 bytes.

29. A communication system, wherein the communication system comprises at least one apparatus according to any one of claims 15 to 21 and at least one apparatus according to any one of claims 22 to 28.
